# EUROPEAN PATENT APPLICATION

(11) **EP 4 760 680 A1**
(43) Date of publication of application: **17.06.2026**
(21) Application number: 24864346.2
(22) Date of filing: 12.08.2024
(51) Int. Cl.: G09F 9/30, H04M 1/02

(54) **DISPLAY SCREEN AND ELECTRONIC DEVICE**

(30) Priority: 12.09.2023 CN 202311175553
(71) Applicant: Honor Device Co., Ltd., Shenzhen, Guangdong 518040 (CN)
(72) Inventor: ZHOU, Yongshan, Shenzhen, Guangdong 518040 (CN); YUAN, Gao, Shenzhen, Guangdong 518040 (CN); CHEN, Huishun, Shenzhen, Guangdong 518040 (CN)
(74) Representative: Henselmann, Alexander Gerhard
(86) International application number: PCT/CN2024/111381
(87) International publication number: WO 2025/055623

(57) **Abstract**

This application provides a display screen and an electronic device. The display screen includes: a display module, including an arc segment and a planar segment; and a support plate, including a first support segment, a second support segment, and a third support segment, where the second support segment is located between the first support segment and the third support segment, the first support segment is attached to the planar segment, the second support segment, the third support segment, and a connection gap between the second support segment and the third support segment form a bent segment, and the bent segment is attached to the arc segment; and a surface of the second support segment is provided with a recessed region, hardness of the second support segment is less than hardness of the first support segment, and hardness of the third support segment is less than the hardness of the first support segment or the second support segment. The second support segment is provided with the recessed region, to make the hardness of the second support segment less than the hardness of the first support segment, which facilitates bending of the second support segment. The hardness of the third support segment is less than the hardness of the first support segment or the second support segment, which facilitates bending of the third support segment, thereby facilitating fitting between the bent segment and the arc segment and alleviating a problem that the support plate and the display module easily peel off.

## Description

This application claims priority to Chinese Patent Application No. 2023111755536, filed with the Chinese National Intellectual Property Administration on September 12, 2023, and entitled "DISPLAY SCREEN AND ELECTRONIC DEVICE", which is incorporated herein by reference in its entirety.

### TECHNICAL FIELD

This application relates to the field of electronic devices, and in particular, to a display screen and an electronic device.

### BACKGROUND

With the development of flexible screens, curved-screen electronic devices with curved side edges have become possible. A display screen with two curved side edges is a dual-curved screen, and a display screen with four curved side edges is a quad-curved screen.

A curved display screen includes a display module and a support module increasing hardness of the display module. The support module is attached to a non-light-emitting side of the display module. To increase compression resistance of the display module and ensure attachment stability between the support module and the display module, hardness and compression resistance of current support modules can still be increased.

Therefore, how to improve attachment stability between the support module and the display module is a technical problem urgently to be resolved by a person skilled in the art.

### SUMMARY

This application provides a display screen, to ensure attachment stability between a support module and a display module. In addition, this application further provides an electronic device including the foregoing display screen.

To achieve the foregoing objective, this application provides the following technical solutions.

According to a first aspect, this application provides a display screen, including a cover, a display module, and a support plate, where a light-emitting side of the display module is connected to the cover, and the support plate is connected to a non-light-emitting side of the display module. The display module includes an arc segment and a planar segment. The support plate includes a first support segment, a second support segment, and a third support segment, the second support segment is located between the first support segment and the third support segment, the first support segment is fitted to the planar segment, the second support segment, the third support segment, and a connection gap between the second support segment and the third support segment form a bent segment, and the bent segment is fitted to the arc segment; and a surface of the second support segment is provided with a recessed region, hardness of the second support segment is less than hardness of the first support segment, and hardness of the third support segment is less than the hardness of the first support segment or the second support segment.

It may be learned from the foregoing content that, the first support segment of the support plate is fitted to the planar segment of the display module, to support the planar segment of the display module, and the bent segment of the support plate includes the second support segment and the third support segment, to support the arc segment of the display module. The second support segment is provided with the recessed region, to make the hardness of the second support segment less than the hardness of the first support segment, which facilitates bending of the second support segment. The hardness of the third support segment is less than the hardness of the first support segment or the second support segment, which facilitates bending of the third support segment, thereby facilitating fitting between the bent segment and the arc segment and alleviating a problem that the support plate and the display module easily peel off.

In a possible implementation, a material of the first support segment is the same as a material of the second support segment, and the hardness of the third support segment is less than the hardness of the second support segment.

It may be learned from the foregoing content that, the hardness of the support plate gradually changes, which ensures a supporting strength for the display module while ensuring fitting stability between the bent segment and the arc segment.

In a possible implementation, a width of the bent segment is L1, a width of the second support segment is L2, and a relationship between the width L2 of the second support segment and the width L1 of the bent segment satisfies: L2/L1 = 1/7 - 1/5.

In a possible implementation, the first support segment and the second support segment are integrally formed, and the second support segment is a structure formed by providing the recessed region on a surface of the first support segment.

It may be learned from the foregoing content that, the first support segment and the second support segment are of an integral structure, which can ensure a connection strength between the first support segment and the second support segment, and avoid breaking during bending.

In a possible implementation, a side edge of the third support segment is connected to a side edge of the first support segment, and the first support segment and the third support segment are pressed and fastened by using a calendering process.

In a possible implementation, the side edge of the third support segment is connected to the side edge of the first support segment in a matching manner by using a concave-convex structure.

It may be learned from the foregoing content that, a connection between the third support segment and the first support segment may be limited in a matching manner by using the concave-convex structure, and then the first support segment and the third support segment are pressed and fastened by using the calendering process to implement the connection.

In a possible implementation, the concave-convex structure includes a dovetail-shaped protrusion and a dovetail slot that are connected in a matching manner, or an L-shaped slot and a protruding block that are connected in a matching manner.

It may be learned from the foregoing content that, the first support segment is connected to the third support segment by using a mortise and tenon process, to ensure connection stability.

In a possible implementation, the recessed region is an indentation, and the indentation is located on a side that is of the support plate and that is close to the display module.

It may be learned from the foregoing content that, it is easy to process by using the indentation, and the indentation is located on the side that is of the support plate and that is close to the display module, so that assembly of the support plate and the display module is not affected when the indentation on the second support segment protrudes towards another direction.

In a possible implementation, the recessed region is a groove, and the groove is located on a side that is of the support plate and that is away from the display module.

It may be learned from the foregoing content that, a size of a contact area between the support plate and the display module is ensured.

In a possible implementation, the groove is a laser-processed groove, a side wall of the groove is an inclined wall, and the groove is a groove that gradually widens from a groove bottom to a groove opening.

It may be learned from the foregoing content that, when the second support segment is bent, because the groove is a groove that gradually widens from the groove bottom to the groove opening, a problem of stress concentration may be avoided.

In a possible implementation, a thickness of the support plate ranges from 0.03 mm to 0.1 mm, and a thickness of the groove ranges from 0.005 mm to 0.05 mm.

In a possible implementation, the display screen further includes a protection layer, the protection layer is detachably connected to the side that is of the support plate and that is away from the display module, and the protection layer is provided with a boss matching the groove.

It may be learned from the foregoing content that, damage to the support plate caused by roller-pressing on the support plate can be avoided by providing the protection layer. The boss matches the groove, and a rolling pressure is transmitted to the groove by using the boss, to ensure uniform force bearing during fitting between the support plate and the display module, thereby ensuring fitting stability between the support plate and the display module.

**In** a possible implementation, the first support segment is a stainless steel plate or a titanium alloy plate, the second support segment is a stainless steel plate or a titanium alloy plate, and the third support segment is a copper plate.

According to a second aspect, this application provides an electronic device, including a display screen, where the display screen is the display screen according to any one of the foregoing aspects.

It may be learned from the foregoing content that, the electronic device in this application includes the display screen provided in the first aspect or any one of the possible implementations. Therefore, the electronic device including the display screen also has all the foregoing technical effects. Details are not described herein again.

### BRIEF DESCRIPTION OF DRAWINGS

FIG. 1 is a diagram of a structure of a curved-screen mobile phone;
FIG. 2 is a diagram of a structure of a first structure of a display screen;
FIG. 3 is a diagram of an assembly process of a support module and a display module in a first structure of a display screen;
FIG. 4 is a diagram of a structure of a second structure of a display screen;
FIG. 5 is a rear view of a second structure of a display screen;
FIG. 6 is a diagram of an upper surface of a second structure of a display screen;
FIG. 7 shows a third structure of a display screen according to an embodiment of this application;
FIG. 8 is a front view of a support plate in a third type of a display screen according to an embodiment of this application;
FIG. 9 is a diagram of a first assembly relationship between a third support segment and a first support segment according to an embodiment of this application;
FIG. 10 is a diagram of a second assembly relationship between a third support segment and a first support segment according to an embodiment of this application;
FIG. 11 is a diagram of a third assembly relationship between a third support segment and a first support segment according to an embodiment of this application;
FIG. 12 is a diagram of a fourth assembly relationship between a third support segment and a first support segment according to an embodiment of this application;
FIG. 13 is a diagram of a first shape of an indentation of a second support segment according to an embodiment of this application;
FIG. 14 is a diagram of a second shape of an indentation of a second support segment according to an embodiment of this application;
FIG. 15 is a diagram of a third shape of an indentation of a second support segment according to an embodiment of this application;
FIG. 16 is a diagram of a fourth shape of an indentation of a second support segment according to an embodiment of this application;
FIG. 17 shows a fourth structure of a display screen according to an embodiment of this application;
FIG. 18 is a diagram of processing a second support segment in a fourth structure of a display screen according to an embodiment of this application; and
FIG. 19 is a diagram of assembly of a fourth structure of a display screen according to an embodiment of this application.

### DESCRIPTION OF EMBODIMENTS

Terms used in the following embodiments are merely intended for describing specific embodiments, but are not intended to limit this application. The terms "one", "a", "the", "the foregoing", "this", and "the one" in singular forms used in the specification and the appended claims of this application are also intended to include forms such as "one or more", unless otherwise specified in the context clearly. It should be further understood that in embodiments of this application, "one or more" means one, two, or more than two; and "and/or" describes an association relationship between associated objects and represents that three relationships may exist. For example, A and/or B may represent that only A exists, both A and B exist, and only B exists, where A and B may be singular or plural. The character "/" generally indicates an "or" relationship between the associated objects.

Reference to "an embodiment", "some embodiments", or the like described in this specification means that one or more embodiments of this application include a specific feature, structure, or characteristic described with reference to the embodiments. Therefore, statements, for example, "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "comprise", "include", "have", and variants thereof all mean "include but are not limited to", unless otherwise specifically emphasized in another manner.

With the development of flexible screens, curved-screen electronic devices with two curved side edges or four curved side edges have become possible. A display screen with two curved side edges is a dual-curved screen, and a display screen with four curved side edges is a quad-curved screen.

The curved-screen electronic devices in this specification include, but are not limited to, a mobile phone, a notebook computer, a tablet computer, a wearable device, a netbook, a walkie talkie, a handheld computer, a point of sales (Point of sales, POS) machine, an ultra-mobile personal computer (ultra-mobile personal computer, UMPC), a personal digital assistant (personal digital assistant, PDA), a virtual reality device, a wireless USB flash drive, a Bluetooth speaker/headset, a driving recorder, a security device, and other electronic devices including screens.

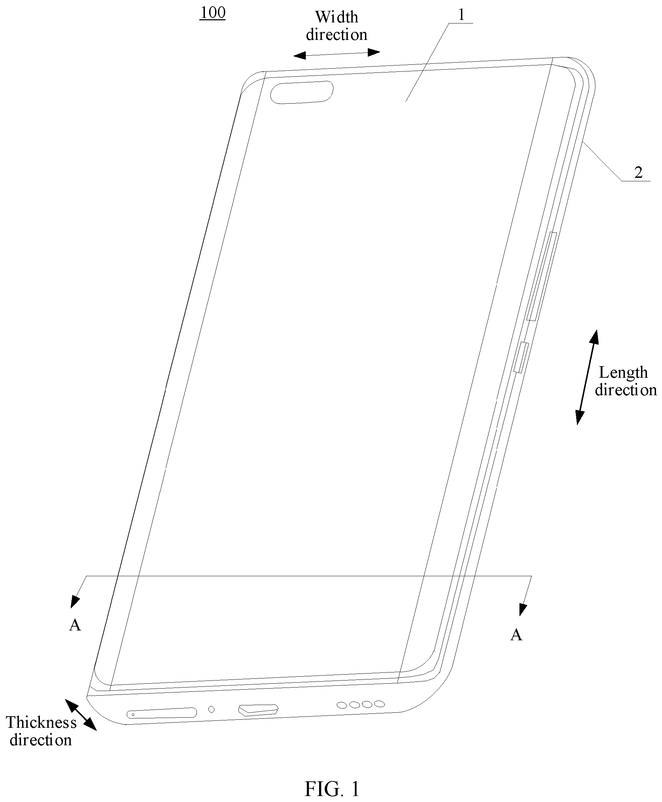

The following describes a structure of a curved screen of a curved-screen electronic device by using a curved-screen mobile phone shown in FIG. 1 as an example. For other electronic devices, refer to the following descriptions. FIG. 1 shows a structure of the curved-screen mobile phone 100.

The curved-screen mobile phone 100 in FIG. 1 includes a display screen 1 and a mobile phone housing 2. The display screen 1 is a curved screen whose two side edges are arc surfaces or whose four side edges are all arc surfaces. The display screen 1 is mounted on the mobile phone housing 2 in a sealed manner. Accommodating space for functional modules is formed between the display screen 1 and the mobile phone housing 2.

The functional modules include, but are not limited to, an antenna structure, a wireless communication module, a processor, an indicator, an internal storage region, a charging management module, a power management module, and a battery.

It should be noted that, a shape, a size, and a material of the mobile phone housing 2 may be selected based on different requirements. Optionally, the mobile phone housing 2 may be made of a metal material or an acrylic material.

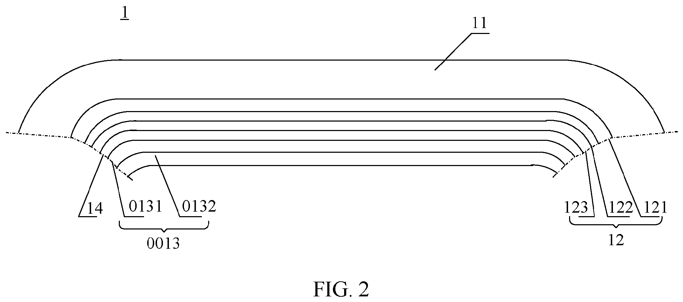

The display screen 1 is configured to display content such as images and videos. When the curved-screen mobile phone 100 is used, the display screen 1 faces a user. For a structure of the display screen 1, refer to FIG. 2. FIG. 2 is a cross-sectional view in a direction AA of FIG. 1, and shows a first structure of the display screen 1.

It should be noted that, terms "first", "second", "third", and the like in the descriptions in this specification are merely used for distinguishing and description, but should not be understood as an indication or implication of relative importance, or should not be understood as an indication or implication of a sequence.

The display screen 1 in FIG. 2 includes a glass cover (Cover Glass, CG) 11, a display module 12, a support module 0013, and a connection layer 14 that are sequentially arranged in a stacked manner.

The display module 12 includes an optically clear adhesive (Optically Clear Adhesive, OCA) 121, a polarizer (Polarizer, Pol) 122, and a display panel (panel) 123 that are sequentially arranged in a stacked manner.

The support module 0013 includes a foam layer 0131 and a copper foil layer 0132 that are sequentially arranged in a stacked manner.

During assembly of the display screen 1, one side of the glass cover 11 faces the user, the other side of the glass cover 11 is bonded to the optically clear adhesive 121, the other side of the optically clear adhesive 121 is bonded to the polarizer 122, and the other side of the polarizer 122 is connected to a light-emitting side of the display panel 123. A non-light-emitting side of the display panel 123 is connected to the foam layer 0131 through the connection layer 14, and the other side of the foam layer 0131 is connected to the copper foil layer 0132.

The glass cover 11 is a transparent glass member. The display panel 123 is configured to display images and videos. When the display screen 1 is a flexible display screen, the display panel 123 is a flexible panel. The polarizer 122 is configured to convert natural light passing through the glass cover 11 into linearly polarized light, so that the display panel 123 can display images based on the linearly polarized light. The optically clear adhesive 121 is characterized by high adhesion, colorless transparency, and high light transmittance, so that the optically clear adhesive 121 connects the glass cover 11 and the polarizer 122 without hindering propagation of display light emitted by the display panel 123 to the outside of the glass cover 11.

The foam layer 0131 can undergo elastic deformation. Therefore, the foam layer 0131 has a shock absorption and vibration damping function, and may perform impact protection on a non-light-emitting surface of the display panel 123. The copper foil layer 0132 has specific hardness and can support the foregoing display panel 123, to increase hardness of the flexible display panel 123 and avoid deformation of the display panel 123. The connection layer 14 includes, but is not limited to, a pressure-sensitive adhesive (PSA) layer.

In some embodiments, if two side edges of the glass cover 11, two side edges of the display module 12, and two side edges of the support module 0013 are all arc surfaces, a dual-curved display screen 1 is formed. If four side edges of the glass cover 11, four side edges of the display module 12, and four side edges of the support module 0013 are all arc surfaces, a quad-curved display screen 1 is formed.

It should be noted that, a size of the glass cover 11, a size of the display module 12, a bending angle of a curved surface of the display screen 1, and the like may be set based on requirements of the curved-screen mobile phone 100. This is not limited herein.

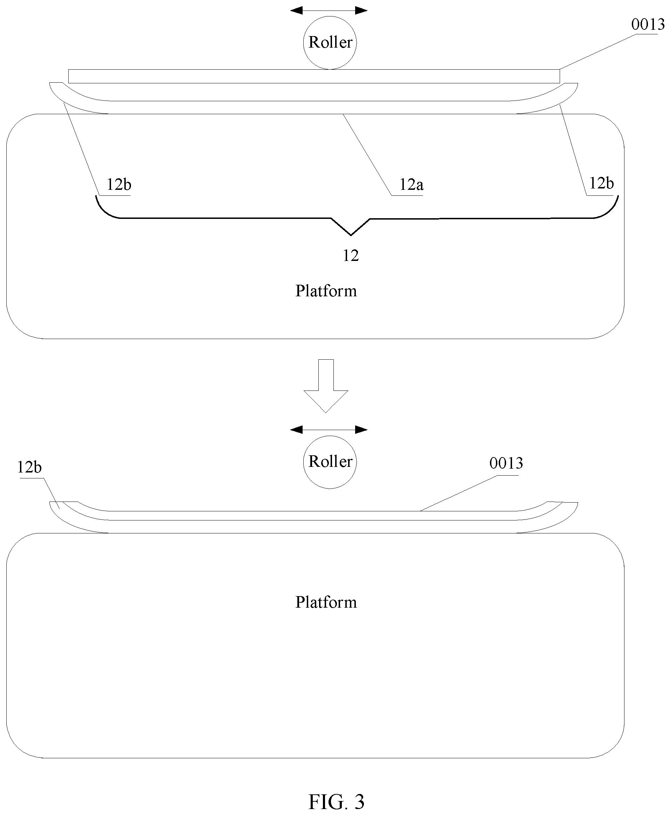

The foregoing describes the structure and a connection relationship of the display screen 1. The following describes, with reference to FIG. 3, a process of assembling the support module 0013 of the display screen 1 to the display module 12 through roller-pressing. FIG. 3 is a diagram of an assembly process of the support module 0013 and the display module 12.

The display module 12 in FIG. 3 includes an arc segment 12b, a planar segment 12a, and an arc segment 12b in a width direction. The planar segment 12a is a middle position of the display screen 1, and two arc segments 12b are distributed on two sides of the planar segment 12a. In some embodiments, the arc segments 12b are located on four side surfaces of the planar segment 12a.

A bending angle of the arc segment 12b includes, but is not limited to, 70°, 75°, 80°, or 88°. Bending angles of all the arc segments 12b may be the same or different. When the bending angles of the two arc segments 12b are the same, the display module 12 is of a symmetrical structure and has good aesthetics.

It should be noted that, the bending angle of the arc segment 12b in this specification is the bending angle of the curved surface of the display screen 1, that is, a bending angle of all structures of the display screen 1. The bending angle is not described below again. For details, refer to the foregoing descriptions.

Before the support module 0013 and the display module 12 are assembled, the support module 0013 is of a planar structure.

A process of assembling the support module 0013 to the display module 12 through roller-pressing is as follows. A roller rolls and applies a pressure to the support module 0013 of the planar structure, so that the support module 0013 is attached to the non-light-emitting side of the display module 12. During roller-pressing, the side edge of the support module 0013 forms an arc surface fitting to the arc segment 12b, so that attachment between the support module 0013 and the display module 12 is completed, thereby increasing hardness of the display module 12.

Although the hardness of the display module 12 attached to the support module 0013 is increased, compression resistance of the copper foil layer 0132 is seriously insufficient. Consequently, after the display screen 1 is touched a plurality of times, the display screen 1 is prone to deformation.

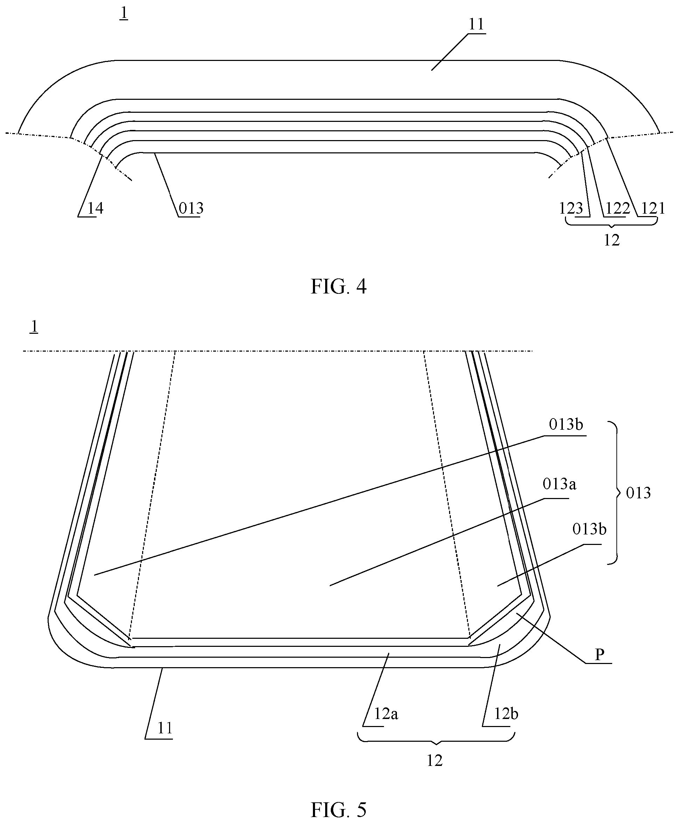

Based on the foregoing problem, FIG. 4 discloses a second structure of the display screen, which has good compression resistance. The following describes the second structure of the display screen 1 in detail with reference to FIG. 4.

The display screen 1 includes a glass cover 11, a display module 12, a support layer 013, and a connection layer 14 that are sequentially arranged in a stacked manner.

For structures of the glass cover 11, the display module 12, and the connection layer 14, refer to the descriptions of the structure of the display screen 1 in FIG. 2. Details are not described herein again.

The support layer 013 is attached to a non-light-emitting side of the display module 12 through the connection layer 14. In other words, in the embodiment shown in FIG. 4, the support layer 013 is used to replace the support module 0013 in the embodiment in FIG. 2.

In some embodiments, the support layer 013 is made of a metal material, such as stainless steel (Steel Use Stainless, SUS) or titanium alloy, with hardness greater than hardness of copper. Because the hardness of stainless steel is greater than the hardness of the copper foil layer 0132 in the embodiment of FIG. 2, compression resistance of the support layer 013 is greater than compression resistance of the support module 0013 in the embodiment of FIG. 2.

However, due to strong rigidity and high hardness of the support layer 013, in a process in which the support layer 013 is roller-pressed onto the non-light-emitting side of the display module 12, a capability of the support layer 013 adapting to an arc segment of the display module 12 is reduced. In particular, for an electronic device with a quad-curved screen, because there are dual-fold regions in two directions, when the support layer 013 is fitted to the dual-fold regions through roller-pressing, a problem of peeling (peeling) or bubble formation shown in FIG. 5 easily occurs at a contact position between the support layer 013 and the dual-fold regions. FIG. 5 is a rear view of the display screen 1.

With reference to FIG. 5, the following describes the problem of the support layer 013 and the display module 12 in detail.

In FIG. 5, the support layer 013 includes a bent segment 013b, a support segment 013a, and a bent segment 013b in a width direction, and the display module 12 includes a planar segment 12a and an arc segment 12b.

For the planar segment 12a and the arc segment 12b, refer to the descriptions in the embodiment of FIG. 3. Details are not described herein again. In some embodiments, the two bent segments 013b are symmetrically arranged and have a same structure.

When the support layer 013 is attached to the display module 12 through roller-pressing, the support segment 013a is fitted to the planar segment 12a, a side edge of the support segment 013a is gradually rolled and formed into the bent segment 013b under the action of a roller, and the bent segments 013b are fitted to the arc segments 12b in a one-to-one correspondence manner. When the display screen 1 is a quad-curved screen, a connection position between adjacent arc segments 12b is a dual-fold region.

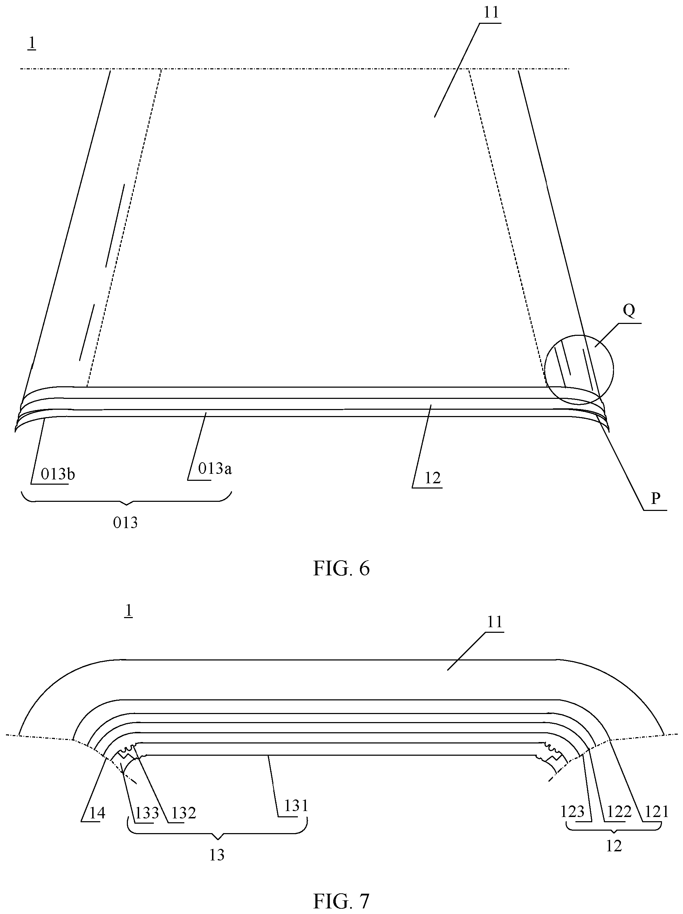

When the bent segment 013b and the arc segment 12b peel off, a peeling region P is formed between the bent segment 013b and the arc segment 12b. In a later stage of a reliability test of the display screen 1, a size of the peeling region P may further be increased. Due to existence of the peeling region P, a refractive index of the arc segment 12b of the display module 12 is different from a refractive index of the planar segment 12a, resulting in a problem that a visual defect occurs on a display surface of the display screen 1. For example, a mura (mura) Q occurs on an arc region of the glass cover 11 in FIG. 6. FIG. 6 is a diagram of an upper surface of the display screen.

Based on the foregoing problem, to alleviate the problem that the bent segment 013b of the support layer 013 with high hardness and the arc segment 12b of the display module 12 easily peel off, FIG. 7 discloses a third structure of the display screen 1, which can alleviate the problem of the visual defect on the display surface of the display screen 1. The following describes the third structure of the display screen 1 in detail with reference to FIG. 7.

In the FIG. 7, the display screen 1 includes a glass cover 11, a display module 12, a support plate 13, and a connection layer 14 that are sequentially arranged in a stacked manner.

For structures of the glass cover 11, the display module 12, and the connection layer 14, refer to the descriptions of the structure of the display screen 1 in FIG. 2. Details are not described herein again.

The support plate 13 is attached to a non-light-emitting side of the display module 12 through the connection layer 14. In other words, in the embodiment shown in FIG. 7, the support plate 13 is used to replace the support layer 013 in the embodiment in FIG. 4.

The support plate 13 includes a first support segment 131, a second support segment 132, and a third support segment 133 in a width direction. The display module 12 includes a planar segment 12a and an arc segment 12b in a width direction.

The first support segment 131 is a flat plate fitted to the planar segment 12a of the display module 12, the second support segment 132 is located at an edge of the first support segment 131, the third support segment 133 is located at an outer edge of the second support segment 132, a bent segment 13b is formed from a side that is of the second support segment 132 and that is connected to the first support segment 131 to a side that is of the third support segment 133 and that is away from the second support segment 132, and the bent segment 13b is fitted to the arc segment 12b of the display module 12 in a one-to-one correspondence manner.

It should be noted that, the second support segment 132 is connected to the first support segment 131, in other words, the second support segment 132 is located at a bending-start position of the bent segment 13b.

In some embodiments, when the second support segment 132 is fitted to the third support segment 133, the second support segment 132 and the third support segment 133 form the bent segment 13b. If there is a connection gap between the second support segment 132 and the third support segment 133, the second support segment 132, the connection gap, and the third support segment 133 form the bent segment 13b.

A bending angle of the bent segment 13b is the same as a bending angle of the arc segment 12b. When one group of opposite side edges of the first support segment 131 is connected to the second support segment 132 and the third support segment 133, the corresponding display screen 1 is a dual-curved screen. When two groups of opposite side edges of the first support segment 131 are both connected to the second support segment 132 and the third support segment 133, the corresponding display screen 1 is a quad-curved screen.

In some embodiments, the first support segment 131 is a metal layer made of stainless steel (Steel Use Stainless, SUS), titanium alloy, or other metal materials with hardness greater than hardness of copper. The second support segment 132 is a metal layer made of stainless steel (Steel Use Stainless, SUS), titanium alloy, or other metal materials with hardness greater than the hardness of copper, and a surface of the second support segment 132 is provided with an indentation. The third support segment 133 is a metal layer made of copper foil, stainless steel (Steel Use Stainless, SUS), titanium alloy, or other materials. That is, the first support segment 131 and the third support segment 133 may be made of a same material or different materials.

It should be noted that, the surface of the second support segment 132 is at least one of an upper surface close to the display module 12 and a lower surface away from the display module 12. In a thickness direction, the upper surface of the second support segment 132 is located on a same side as an upper surface of the display screen 1, and the lower surface of the second support segment 132 is located on a same side as a lower surface of the display screen 1.

The surface of the second support segment 132 is provided with the indentation, so that the hardness of the second support segment 132 is reduced compared with the hardness of the first support segment 131. Therefore, a stress of the second support segment 132 is reduced compared with a stress of the first support segment 131, which facilitates bending of the second support segment 132, thereby facilitating fitting between the bent segment 13b and the arc segment 12b, and alleviating the problem in the embodiment of FIG. 4 that the support layer 013 and the arc segment 12b easily peel off.

In an optional embodiment, the material of the second support segment 132 is the same as the material of the first support segment 131. When the material of the second support segment 132 is the same as the material of the first support segment 131, the second support segment 132 and the first support segment 131 may be of an integral structure. In other words, the second support segment 132 is obtained by processing the indentation on the first support segment 131.

It should be noted that, in a process in which the second support segment 132 is obtained by processing the indentation on the first support segment 131, because a thickness of the support plate 13 of the electronic device is very small, in some embodiments, a thickness of the first support segment 131 is the thickness of the support plate 13, or even less than the thickness of the support plate 13. Therefore, the thickness of the first support segment 131 is also very small. When the indentation is processed on a surface of the first support segment 131, if a pressure for processing the indentation is large, a shape opposite to that of the indentation easily appears on the other surface of the first support segment 131, that is, when the surface of the first support segment 131 is recessed, the other surface has a bump protruding outward. During assembly of the support plate 13, a side that is of the support plate 13 and that has the indentation is fitted to the display module 12, and a surface opposite to the indentation faces away from the display module 12. The bump on the surface opposite to the indentation does not affect fitting between the support plate 13 and the display module 12, and the bump faces the inner side of accommodating space of the curved-screen mobile phone 100 and do not affect mounting of the functional modules.

Based on the foregoing descriptions, if the material of the third support segment 133 is copper foil, and the materials of the first support segment 131 and the second support segment 132 are both stainless steel, because the hardness of copper foil is less than the hardness of stainless steel, the third support segment 133 is prone to bending, which facilitates fitting between the bent segment 13b and the arc segment 12b, thereby alleviating the problem in the embodiment of FIG. 4 that the support layer 013 and the arc segment 12b easily peel off.

It should be noted that, because the surface of the second support segment 132 is provided with the indentation, the hardness of the second support segment 132 is less than the hardness of the first support segment 131, and the third support segment 133 is a copper foil plate with hardness less than the hardness of the first support segment 131. In addition, in some embodiments, based on different depths of the indentation, the hardness of the third support segment 133 is also less than the hardness of the second support segment 132. The hardness of the second support segment 132 is less than the hardness of the first support segment 131, and the hardness of the third support segment 133 is less than the hardness of the second support segment 132, so that the hardness of the support plate 13 gradually changes, thereby ensuring a supporting strength while ensuring fitting stability.

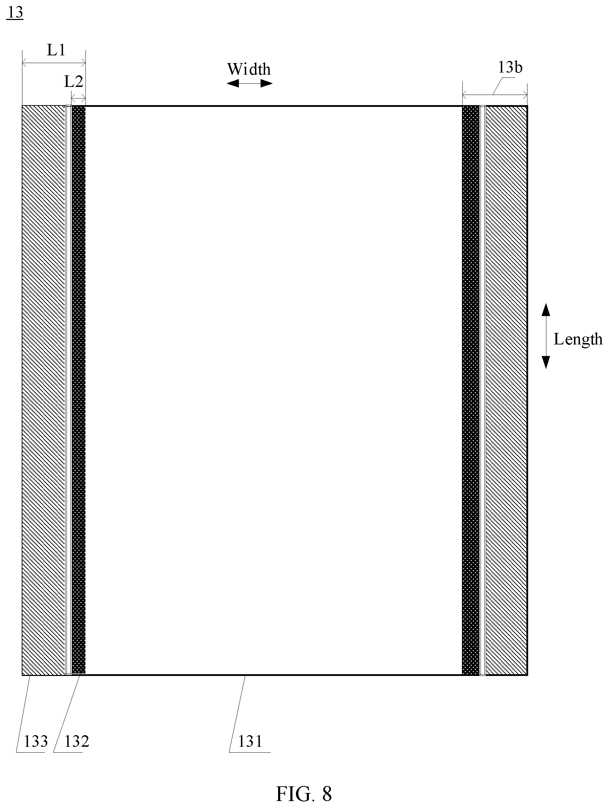

The foregoing content describes the structure and the material of the support plate 13. The following describes size relationships between various portions of the support plate 13 with reference to FIG. 8. FIG. 8 is a front view of the support plate 13.

As shown in FIG. 8, a width of the bent segment 13b of the support plate 13 is L1, and a width of the second support segment 132 is L2. In some embodiments, a relationship between the width L2 of the second support segment 132 and the width L1 of the bent segment 13b satisfies: L2/L1 = 1/7 - 1/5.

A width of the first support segment 131 may be set based on different requirements. In addition, for a width relationship between the bent segment 13b and the support plate 13, refer to a size of a bent segment 13b of an existing curved screen.

In a set group of example data, when a width of the support plate 13 is 72 mm and the width L1 of the bent segment 13b is 12 mm, the width L2 of the second support segment 132 is 2 mm, and a width of the connection gap between the second support segment 132 and the third support segment 133 ranges from 0.5 mm to 1 mm.

It should be noted that, in FIG. 8, a direction of a line connecting the two bent segments 13b is a width direction, and a direction perpendicular to the width direction is a length direction. For all width directions and length directions in this specification, refer to the descriptions.

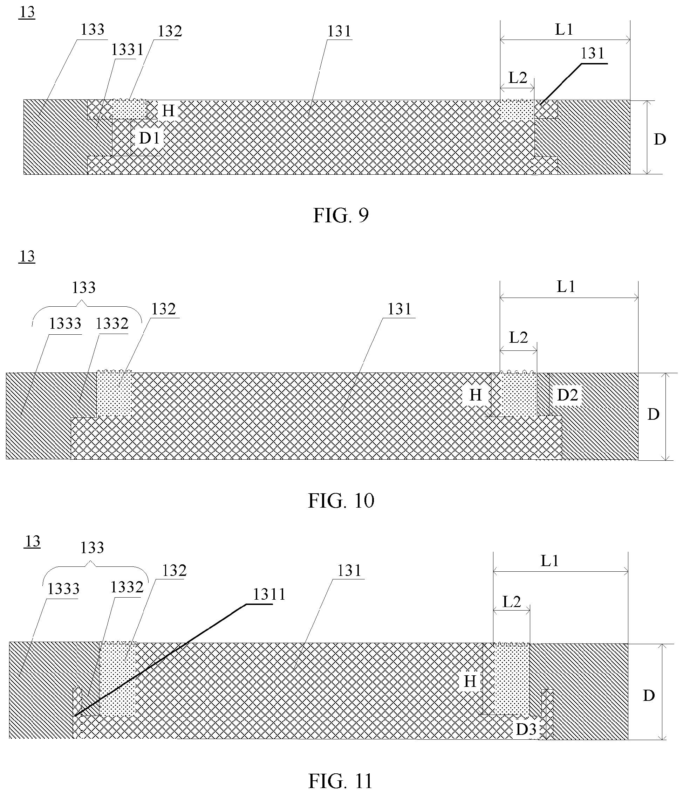

The foregoing content describes the position and the width of the second support segment 132 of the support plate 13. The following describes assembly manners of the third support segment 133 with reference to FIG. 9 to FIG. 12. FIG. 9 to FIG. 12 each show an assembly manner of the third support segment 133.

It should be noted that, in FIG. 9 to FIG. 12, the second support segment 132 may be directly obtained through processing on an upper surface of the first support segment 131. Therefore, a connection between the third support segment 133 and the second support segment 132 may also be considered as a connection between the third support segment 133 and the first support segment 131, and then the second support segment 132 is obtained through processing on the first support segment 131, to complete processing of the support plate 13.

The following content is described by using an example in which the second support segment 132 is obtained through processing on the first support segment 131, and the third support segment 133 is connected to an outer edge of the first support segment 131. If the second support segment 132 and the first support segment 131 are of a separate structure, and the third support segment 133 is assembled to the outer edge of the second support segment 132. For a connection manner, refer to the following descriptions.

In FIG. 9, a side surface that is of the third support segment 133 and that is close to the first support segment 131 is provided with a protrusion 1331, and a side surface that is of the first support segment 131 and that is close to the third support segment 133 is provided with a slot. The third support segment 133 and the first support segment 131 are engaged with each other through the protrusion 1331 and the slot.

In some embodiments, a thickness of the third support segment 133 is the same as the thickness of the first support segment 131, and is a thickness D of the support plate 13. The protrusion 1331 of the third support segment 133 is located in the middle of the third support segment 133, and a thickness of the protrusion 1331 is D1. In some embodiments, the thickness D1 of the protrusion 1331 is D/2, a distance from the protrusion 1331 to the upper surface of the first support segment 131 is D/4, and a distance from the protrusion 1331 to a lower surface of the first support segment 131 is D/4.

The second support segment 132 is located at an outer edge of the third support segment 133, so that there is a connection gap between a surface of the third support segment 133 and the surface of the second support segment 132.

In some embodiments, a thickness H of the second support segment 132 includes, but is not limited to, D/4.

Based on FIG. 9, the slot of the first support segment 131 may be a dovetail slot, and the protrusion 1331 on the third support segment 133 is a dovetail-shaped protrusion matching the dovetail slot. A matching manner of the dovetail-shaped protrusion and the dovetail slot is a mortise and tenon connection, to limit the first support segment 131 and the third support segment 133 in the width direction, thereby improving assembly stability of the first support segment 131 and the third support segment 133.

It should be noted that, when the first support segment 131 and the third support segment 133 are assembled, the dovetail-shaped protrusion is inserted into the dovetail slot in a plugging manner.

In FIG. 10, the side surface that is of the third support segment 133 and that is close to the first support segment 131 is provided with a stepped surface. The third support segment 133 includes a first segment 1332 and a second segment 1333 in the width direction, where the first segment 1332 is fitted to the second support segment 132.

A thickness of the second segment 1333 is the same as the thickness D of the support plate 13, and a thickness of the first segment 1332 is less than the thickness of the second segment 1333, so that the first segment 1332 and the second segment 1333 form the foregoing stepped surface.

In some embodiments, the thickness D2 of the first segment 1332 is D/2, and the thickness H of the second support segment 132 includes, but is not limited to, D/2.

The first segment 1332 may optionally be located above a thickness center of the first segment 1332 or below the thickness center of the first segment 1332.

In some embodiments, the third support segment 133 may be provided with a plurality of portions with different thicknesses in the width direction, to form a plurality of stepped surfaces, and all the portions fall within the protection scope. In this specification, "a plurality of" means two or more.

In FIG. 11, the third support segment 133 includes a first segment 1332 and a second segment 1333 in the width direction, and the first segment 1332 is fitted to the second support segment 132. The thickness of the second segment 1333 is the same as the thickness D of the support plate 13, the thickness of the first segment 1332 is less than the thickness of the second segment 1333, and a gap is provided between the first segment 1332 and the second segment 1333, so that the gap and the bottom of the first segment 1332 form an L-shaped slot.

The first support segment 131 is provided with a protruding block 1311 engaged with the L-shaped slot. The engagement between the protruding block 1311 and the L-shaped slot can limit the first support segment 131 and the third support segment 133 in the width direction, thereby improving assembly stability of the first support segment 131 and the third support segment 133.

In some embodiments, the thickness of the first segment 1332 is the same as the thickness H of the second support segment 132 and is 3D/4, and a height D3 of the gap is D/2.

It should be noted that, when the first support segment 131 and the third support segment 133 are assembled, the protruding block 1311 is inserted into the L-shaped slot in a plugging manner.

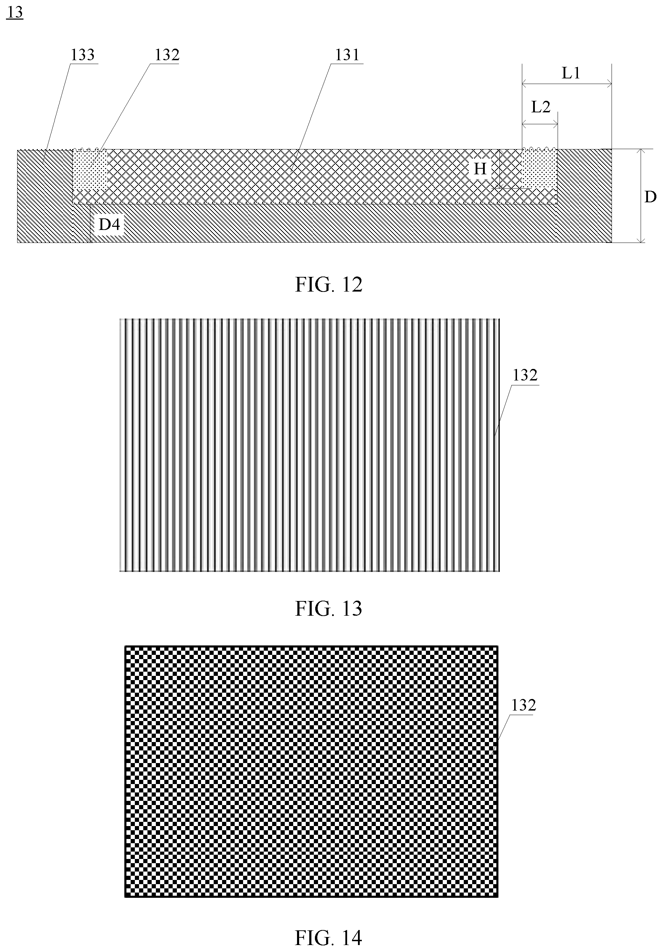

In FIG. 12, the third support segment 133 is a U-shaped member, and an accommodating groove is formed in the middle. The first support segment 131 is assembled in the accommodating groove in the width direction.

In some embodiments, a thickness of a side edge of the third support segment 133 is the same as the thickness D of the support plate 13, and a thickness D4 of a bottom portion of the third support segment 133 is 3D/5. The thickness H of the second support segment 132 is D/2.

The foregoing describes several assembly manners of the third support segment 133 and the first support segment 131. These assembly manners are variations of the mortise and tenon process. In some embodiments, another mortise and tenon process may alternatively be used for connection. To ensure that the third support segment 133 is fixedly connected to the first support segment 131, in some embodiments, the assembled third support segment 133 and first support segment 131 in the foregoing embodiment are fixed connected by using a calendering manner.

A calendering process refers to a pressing process in which a flat plate blank in a specific shape is formed into an open hollow member by using a die cavity under a pressure of a punch. The calendering process is processing by using the pressure and stretching and extensibility. Smelting can change a chemical composition of a steel material, but the calendering process does not change the chemical composition of steel. For a principle of the calendering process, refer to forging (forming in a solid state) processing. Only forging can be performed on steel, to finally change a physical state of steel.

It should be noted that, based on the foregoing calendering process, it may be learned that, calendering is performed on a material in a blank state to obtain the foregoing first support segment 131 and third support segment 133. Therefore, the third support segment 133 of the blank and the first support segment 131 of the blank are assembled by using the assembly manners disclosed in the foregoing embodiments, and the support plate 13 with a required thickness is obtained by using the calendering process.

Because the foregoing embodiment discloses the size relationship between the support plate 13 and the first support segment 131, the sizes of the third support segment of the blank and the first support segment of the blank may be equally increased based on a change in the thickness D of the support plate 13 in the calendering process.

The second support segment 132 may be obtained through processing on the first support segment 131 after the first support segment 131 and the third support segment 133 with required thicknesses are obtained by using the calendering process.

The calendering process is not specifically described herein. In this application, only the calendering process is used to implement the fixed connection between the first support segment 131 and the third support segment 133. Certainly, manners of implementing the fixed connection between the first support segment 131 and the third support segment 133 include, but are not limited to, soldering, adhesion, and the like.

The foregoing describes the assembly manner, the connection manner, and the size relationship of the first support segment 131 and the third support segment 133 in detail. The following describes a shape of the indentation of the second support segment 132 with reference to FIG. 13 to FIG. 16. FIG. 13 to FIG. 16 each provide a shape of the indentation.

In FIG. 13, the indentation on the second support segment 132 is a vertical strip groove, and an extending direction of the vertical strip groove is the length direction of the support plate 13.

In FIG. 14, the indentation on the second support segment 132 is a pit, and a bump is formed on the surface of the second support segment 132. In some embodiments, the bump includes, but is not limited to, a circular bump.

In some prototyping solutions, test thicknesses of the second support segment 132 are respectively 0.03 mm and 0.05 mm, and a depth of a stamping concave- bump on the surface of the second support segment 132 ranges from 0.001 mm to 0. 01 mm. After the second support segment 132 with a thickness of 0.03 mm is stamped, a yield strength is reduced from 1531 Mpa to 1045 Mpa, and a tensile strength is reduced from 1756 Mpa to 1108 Mpa; and a yield strength of the second support segment 132 with a thickness of 0.05 mm is reduced from 329 Mpa to 150 Mpa, and a tensile strength is reduced from 561 Mpa to 253 Mpa.

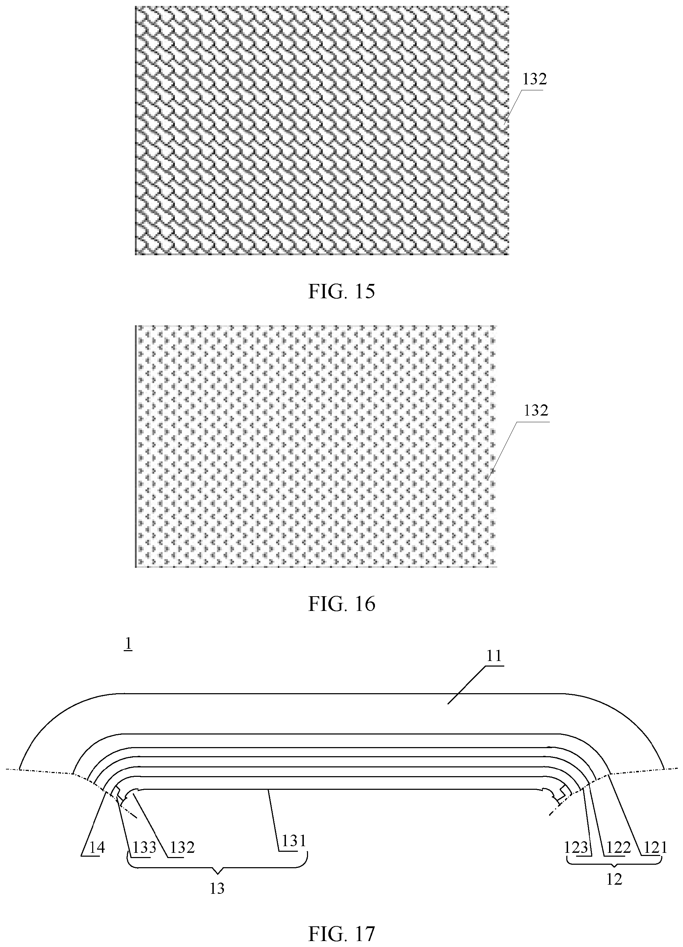

The indentation on the second support segment 132 in FIG. 15 and the indentation on the second support segment 132 in FIG. 16 are both irregular patterns.

In some embodiments, the indentation on the second support segment 132 includes, but is not limited to, being obtained through processing by using a stamping process.

It should be noted that, the indentation on the surface of the second support segment 132 includes a plurality of pits in the length direction of the support plate 13, so that when the second support segment 132 is bent, the second support segment 132 can bend along the pits. Therefore, indentations including pits arranged along the length direction of the support plate 13 all fall within the protection scope. This is not listed one by one in this specification.

In some embodiments, when the bent segments 13b are located at two ends of the width of the support plate 13, the indentation includes a plurality of pits in the width direction of the support plate 13.

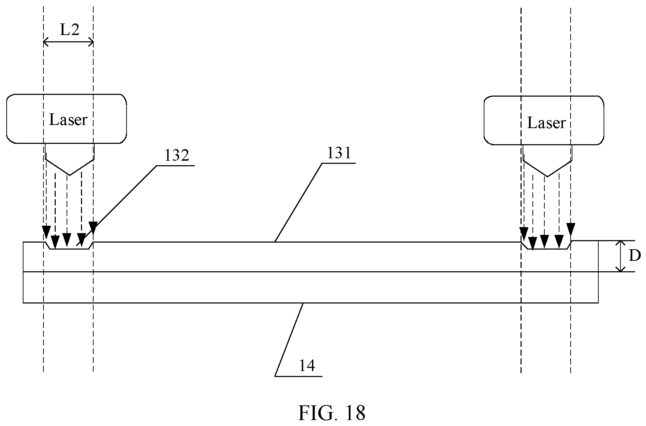

The foregoing embodiment discloses a solution in which the surface of the second support segment 132 is stamped to obtain the indentation, to reduce the hardness of the second support segment 132, thereby reducing the stress of the second support segment 132. In some embodiments, other manners may alternatively be used to reduce the hardness of the second support segment 132. The following describes other manners for reducing the hardness of the second support segment 132 with reference to structures of the display screen disclosed in FIG. 17 and FIG. 18.

A difference between the second support segment 132 in FIG. 17 and the second support segment 132 in FIG. 7 lies in that a groove is processed on the surface of the second support segment 132 in FIG. 17. Other structures of the display screen 1 are the same as those in FIG. 7 and are not repeated herein again.

The groove is processed on the surface of the second support segment 132, so that the thickness of the second support segment 132 can be reduced, thereby reducing the hardness of the second support segment 132 and reducing the stress of the second support segment 132.

As shown in FIG. 18, in some embodiments, the groove is laser-processed on the surface of the first support segment 131, and a position of the groove obtained through processing is the second support segment 132. Certainly, the groove may alternatively be processed on the surface of the first support segment 131 in another processing manner, to obtain the second support segment 132.

In some embodiments, the surface of the first support segment 131 may be at least one of the upper surface and the lower surface. The groove obtained through laser processing extends in the length direction or the width direction of the support plate 13, and a width of the groove is the width L2 of the second support segment 132, a depth of the groove extends in the thickness direction of the support plate 13, and the depth is not specifically limited. The width L2 of the second support segment 132 satisfies the conditions in the foregoing embodiments.

When the bent segments b are located at two sides of the display screen 1 in the width direction, the groove extends in the length direction of the support plate 13. When the bent segments 13b are located at two sides of the display screen 1 in the length direction, the groove extends in the width direction of the support plate 13.

An example in which the thickness of the first support segment 131 ranges from 0.03 mm to 0.1 mm is used. The thickness of the groove obtained through laser processing may range from 0.005 mm to 0.05 mm. In some prototyping solutions, an obtained optimal combination is that the thickness of the first support segment 131 is 0.03 mm, and the thickness of the groove obtained through laser processing ranges from 0.08 mm to 0.1 mm. In some embodiments, the thickness of the first support segment 131 is the thickness of the support plate 13.

The groove on the surface of the first support segment 131 can reduce the thickness of the first support segment 131, that is, the thickness of the second support segment 132 is less than the thickness of the first support segment 131, so that the hardness of the second support segment 132 is less than the hardness of the first support segment 131, which facilitates bending of the second support segment 132, thereby alleviating the problem in the embodiment of FIG. 4 that the support layer 013 and the arc segment 12b easily peel off.

It may be learned with reference to characteristics of laser processing that, a side edge of the obtained groove is an inclined surface. In some embodiments, an inclined angle ranges from 30° to 90°.

It should be noted that, the side edge of the groove obtained through laser processing is inclined, and when the second support segment 132 is bent, a pressing stress may further be released, to help further alleviate the problem of peeling off.

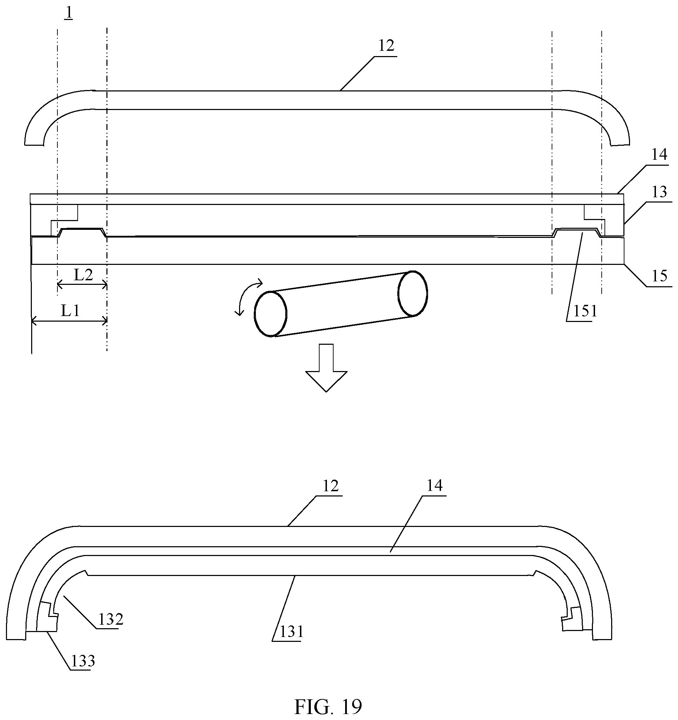

Because the thickness of the second support segment 132 is less than the thickness of the first support segment 131, when the support plate 13 is fitted to the display module 12, the groove on the surface of the second support segment 132 cannot be directly subjected to a rolling pressure, which affects fitting between the second support segment 132 and the display module 12. Based on this problem, the embodiment shown in FIG. 19 discloses a manner of fitting the support plate 13 to the display module 12.

As shown in FIG. 19, the display screen 1 includes a display module 12, a support plate 13, a connection layer 14, and a protection layer 15.

For structures of the display module 12, the support plate 13, and the connection layer 14, refer to the descriptions of the structure of the display screen 1 in FIG. 17. Details are not described herein again.

The protection layer 15 includes a boss 151, and a shape and a size of the boss 151 match the groove on the surface of the second support segment 132 of the support plate 13.

In some embodiments, the protection layer 15 is a plastic film or a silicone film, which can protect the support plate 13 and prevent the support plate 13 from being damaged by direct force application. The protection layer 15 is bonded to a side that is of the support plate 13 and that is away from the display module 12, and the boss 151 is assembled in the groove and is fitted to the groove.

A roller applies an external force to the support plate 13 by rolling the protection layer 15, so that the support plate 13 is fitted to the display module 12 through the connection layer 14. Because the side that is of the protection layer 15 and that is away from the support plate 13 is a planar surface, and the force of the roller may be transmitted to the second support segment 132 under the action of the boss 151, this helps ensure fitting between the second support segment 132 and the display module 12.

After the support plate 13 is fitted to the display module 12, the protection layer 15 may be removed.

It should be noted that, any manner capable of reducing the stress at a position that is of the first support segment 131 and that is close to the third support segment 133 falls within the protection scope.

It should be noted that, the electronic device including the display screen 1 disclosed in the embodiments of FIG. 7 and FIG. 17 also has all the technical effects brought by the display screen 1.

The principle and implementations of the present invention are described herein by using specific examples. The descriptions about embodiments are merely provided to help understand the method and core ideas of the present invention. It should be noted that a person of ordinary skill in the art may further make several improvements and modifications without departing from the principle of the present invention. These improvements and modifications also fall within the protection scope of the claims of the present invention.

## Claims

1. A display screen, comprising a cover, a display module, and a support plate, wherein a light-emitting side of the display module is connected to the cover, and the support plate is connected to a non-light-emitting side of the display module;
the display module comprises an arc segment and a planar segment; and
the support plate comprises a first support segment, a second support segment, and a third support segment, the second support segment is located between the first support segment and the third support segment, the first support segment is attached to the planar segment, the second support segment, the third support segment, and a connection gap between the second support segment and the third support segment form a bent segment, and the bent segment is attached to the arc segment; and a surface of the second support segment is provided with a recessed region, hardness of the second support segment is less than hardness of the first support segment, and hardness of the third support segment is less than the hardness of the first support segment or less than the hardness of the second support segment.

2. The display screen according to claim 1, wherein a material of the first support segment is the same as a material of the second support segment, and the hardness of the third support segment is less than the hardness of the second support segment.

3. The display screen according to claim 1 or 2, wherein a width of the bent segment is L1, a width of the second support segment is L2, and a relationship between the width L2 of the second support segment and the width L1 of the bent segment satisfies: L2/L1 = 1/7 - 1/5.

4. The display screen according to any one of claims 1 to 3, wherein the first support segment and the second support segment are integrally formed, and the second support segment is a structure formed by providing the recessed region on a surface of the first support segment.

5. The display screen according to claim 4, wherein a side edge of the third support segment is connected to a side edge of the first support segment, and the first support segment and the third support segment are pressed and fastened by using a calendering process.

6. The display screen according to claim 5, wherein the side edge of the third support segment is connected to the side edge of the first support segment in a matching manner by using a concave-convex structure.

7. The display screen according to claim 6, wherein the concave-convex structure comprises a dovetail-shaped protrusion and a dovetail slot that are connected in a matching manner, or
an L-shaped slot and a protruding block that are connected in a matching manner.

8. The display screen according to any one of claims 1 to 7, wherein the recessed region is an indentation, and the indentation is located on a side that is of the support plate and that is close to the display module.

9. The display screen according to any one of claims 1 to 7, wherein the recessed region is a groove, and the groove is located on a side that is of the support plate and that is away from the display module.

10. The display screen according to claim 9, wherein the groove is a laser-processed groove, a side wall of the groove is an inclined wall, and the groove is a groove that gradually widens from a groove bottom toward a groove opening.

11. The display screen according to claim 9 or 10, wherein a thickness of the support plate ranges from 0.03 mm to 0.1 mm, and a thickness of the groove ranges from 0.005 mm to 0.05 mm.

12. The display screen according to any one of claims 9 to 11, further comprising:
a protection layer, wherein the protection layer is detachably connected to the side that is of the support plate and that is away from the display module, and the protection layer is provided with a boss matching the groove.

13. The display screen according to any one of claims 1 to 12, wherein the first support segment is a stainless steel plate or a titanium alloy plate, the second support segment is a stainless steel plate or a titanium alloy plate, and the third support segment is a copper plate.

14. An electronic device, comprising a display screen, wherein the display screen is the display screen according to any one of claims 1 to 13.
